(19) Europäisches Patentamt
European Patent Office
Office européen des brevets

(11) EP 4 077 484 B1

# (12) EUROPEAN PATENT SPECIFICATION

(45) Date of publication and mention of the grant of the patent:
**05.11.2025 Bulletin 2025/45**

(21) Application number: **20825088.6**

(22) Date of filing: **01.12.2020**

(51) International Patent Classification (IPC):
***C08G 77/12*** *(2006.01)* ***C08G 77/20*** *(2006.01)*
***C08G 77/38*** *(2006.01)* ***C08G 77/46*** *(2006.01)*
***C08K 5/06*** *(2006.01)* ***C08L 83/12*** *(2006.01)*
***C08G 77/34*** *(2006.01)*

(52) Cooperative Patent Classification (CPC):
(C-Sets available)
**C08G 77/12; C08G 77/20; C08G 77/34; C08G 77/38; C08G 77/46; C08K 5/06; C08L 83/12**
(Cont.)

(86) International application number:
**PCT/US2020/062694**

(87) International publication number:
**WO 2021/126516 (24.06.2021 Gazette 2021/25)**

## (54) LOW ISOMER HYDROSILYLATION

ISOMERISIERUNGSARME HYDROSILYLIERUNG

HYDROSILYLATION À FAIBLE ISOMÉRISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2019 US 201962948442 P**

(43) Date of publication of application:
**26.10.2022 Bulletin 2022/43**

(73) Proprietors:
- **Dow Silicones Corporation**
  **Midland, Michigan 48686 (US)**
- **Dow Global Technologies LLC**
  **Midland, MI 48674 (US)**

(72) Inventors:
- **SUNDERLAND, Travis**
  **Midland, Michigan 48686-0994 (US)**
- **BAUMGARTNER, Ryan**
  **Midland, Michigan 48686-0994 (US)**
- **BEKEMEIER, Thomas D.**
  **Midland, Michigan (US)**
- **LIU, Nanguo**
  **Midland, Michigan 48611 (US)**
- **JOFFRE, Eric**
  **Midland, Michigan 48686-0994 (US)**
- **KENNAN, John**
  **Midland, Michigan 48640 (US)**
- **PETROFF, Lenin**
  **Bay City, Michigan 48708 (US)**
- **DEETH, Brian**
  **Midland, Michigan 48640 (US)**
- **FERRITTO, Michael S.**
  **Midland, Michigan 48686-0994 (US)**
- **SCHMIDT, Alix**
  **Midland, Michigan 48674 (US)**

(74) Representative: **Murgitroyd & Company**
**165-169 Scotland Street**
**Glasgow G5 8PL (GB)**

(56) References cited:
**EP-A2- 0 995 771**
**US-A1- 2004 132 951**
**US-A1- 2012 245 305**
**US-A1- 2016 331 673**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/06, C08L 83/04;**
**C08L 83/12, C08K 5/56, C08L 83/00**

## Description

*Field of the Invention*

The present invention relates to a reaction composition suitable for conducting hydrosilylation while generating little or no by-product of alkene reactant isomer in the final product.

*Introduction*

Hydrosilylation reactions are combination reactions that occur between an alkene, typically a terminal alkene, and a silyl hydride species. Hydrosilylation reactions are commonly catalyzed using a platinum-based catalyst. An exemplary hydrosilylation reaction can be illustrated, for example, as follows:

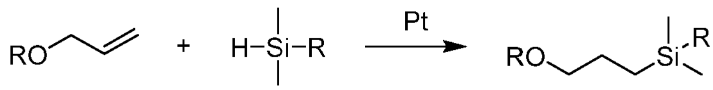


When the alkene is an allyloxy group, a fraction of the allyl group tends to reversibly isomerize under hydrosilylation reaction conditions to produce cis and trans 2-alkene isomers that are typically unreactive to hydrosilylation:

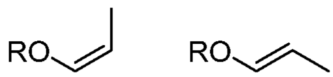

*cis* *trans*

It is common for roughly 15 mole-percent (mol%) or more of the allyl groups to carry through with the reaction product as unwanted 2-alkene isomer by-products. Of particular concern is that the 2-alkene isomer by-products have been associated with malodors in the final product, especially in hydrosilylation reactions with allyl polyethers, presumably due to degradation of the isomers into propionaldehyde (see, for instance, US8877886).

Hydrosilylation reactions are often run with an excess of allyl groups to at least partially account for the generation of unreactive isomerization by-product. As a result, all of the silyl hydride groups tend to react during the reaction producing a product free of silyl hydride groups. Such a reaction is unsuitable when trying to prepare a product that retains terminal Si-H bonds for use in further reactions.

Patent US 2004/132951 describes a process for the preparation of polyether-polysiloxane copolymers and their working up by means of a purification treatment in order to obtain polyether-polysiloxane copolymers having very low level of propionaldehyde components, thereby providing polyether-polysiloxane copolymers having no malodors. The copolymers are prepared by preparing a composition comprising a blend of different types of allyl-polyether compounds, an organopolysiloxane comprising hydrosilyl SiH groups and a platinum-based hydrosilylation catalyst. After hydrosilylation, the resulting polyether-polysiloxane copolymer has a strong propionaldehyde odor. The mixture obtained is then treated with an aqueous solution of $H_2O_2$ at 100°C to remove the propionaldehyde derivative by-product. The resulting polyether-polysiloxane copolymer is characterised by an amount of less than 1 ppm of propionaldehyde derivative.

Patent US 2012/245305 relates to a method for preparing a polyoxyalkylene-modified polysiloxane composition that is free of by-products responsible for generating malodors. The process involves the preparation of a composition comprising a polyoxyalkylene compound having a terminal allyl group, an organopolysiloxane comprising hydrosilyl SiH groups and a hydrosilylation catalyst comprising a platinum-based compound. The polyether-polysiloxane copolymer obtained after the hydrosilylation step is then submitted to a purifying treatment by contacting the copolymer with an aqueous solution of an acidic inorganic salt followed by a stripping step, thereby removing odorous by-products such as propionaldehyde derivatives.

Patent EP 0 995 771 describes a method for preparing high purity oxyalkylene-modified organopolysiloxannes wherein the process comprises the step of preparing a composition comprising an polyoxyalkylene compound comprising a terminal allyl group, an organopolysiloxane comprising hydrosilyl SiH group and a platinum-based hydrosilylation catalyst. The polyether-polysiloxane copolymer obtained is free of isomerised allyl-polyoxyalkylene residuals.

Finally, patent US 2016/331673 describes a cosmetic composition comprising a silicone organic elastomer and other cosmetic ingredients, wherein the silicone elastomer is the reaction product of a polysiloxane comprising SiH groups and a compound B wherein B may be an allyl-polyether having a terminal epoxy group such that the molar ratio SiH/allyl-polyether is 10-1 to 1/10.

It is desirable to identify a hydrosilylation reaction process with allyl polyethers that results in less than 5 mol%,

preferably less than 3 mol%, and even more preferably less than one mol% of the allyl polyether remaining as 2-alkene by-products. It is even more desirable to identify such a process that produces a reaction product that has a Si-H bond thereby enabling the reaction product to be used as a reactant in further hydrosilylation reactions.

## BRIEF SUMMARY OF THE INVENTION

The present invention provides a solution to the problem of conducting a hydrosilylation reaction with allyl polyethers that results in less than 5 mol%, and can result in 3 mol% or less, even one mol% or less of the allyl polyethers remaining as 2-alkene by-products. Moreover, the hydrosilylation reaction produces a reaction product that has a Si-H bond thereby enabling the reaction product to be used as a reactant in further hydrosilylation reactions. These are the target results.

What is even more surprising and valuable is that the present invention is able to achieve the target results with a reaction time of 48 hours or less, 24 hours or less, and in some cases even 12 hours or less, 10 hours or less, 8 hours or less, 6 hours or less, 4 hours or less and even 2 hours or less while at the same time one hour or longer, typically 2 hours or longer; while at the same time running at a reaction temperature of 250 degrees Celsius (°C) or less, 200 °C or less, 180 °C or less, 150 °C or less, 140°C or less, 130 °C or less, 120 °C or less and even 110 °C or less; and at the same time with a platinum catalyst concentration of 500 weight-parts per million (ppm) or less, even 100 ppm or less, 75 ppm or less, 50 ppm or less, 25 ppm or less, even 10 ppm or less and that is typically one ppm or more, 2 ppm or more, 5 ppm or more and preferably 7.5 ppm or more, 10 ppm or more, even 20 ppm or more based on the reaction composition weight.

The present invention is a result of discovering that specific silyl hydrides enable running a reaction that achieves the target characteristics when the mole ratio of silyl hydride functionality to allyl functionality is 4 or more. The silyl hydride must comprise two or more $(CH_3)_2HSiO_{1/2}$ siloxane groups (M' groups) separated by at least one siloxane group, preferably at least one $(CH_3)_2SiO_{2/2}$ siloxane groups (D groups). The reaction requires running in excess silyl hydride functionality instead of the common process of running in excess allyl.

It has also been surprisingly discovered that purifying the allyl ether prior to running the hydrosilylation reaction allows the target results to be achieved faster, at lower temperatures and with less platinum-based catalyst than if the allyl ether is not purified.

In a first aspect, the present invention is a reaction composition comprising: (a) an allyl polyether, the allyl polyether having the following formula:

$$CH_2=CHCH_2O\text{-}A_a\text{-}B$$

where: (i) subscript a is the average number of consecutive A units per molecule and is a value in a range of 2 to 170; (ii) A is independently in each occurrence selected from a group consisting of: $-CH_2CH_2O-$; $-CH_2CH(CH_3)O-$; $-CH(CH_3)CH_2O-$, $CH_2CH(CH_2CH_3)O-$; $-CH(CH_2CH_3)CH_2O-$, $-CH_2CF(CF_3)O-$, $-CF(CF_3)CF_2O-$ and $-CF_2CF(CF_3)O-$; and (iii) B is selected from a group consisting of -H, $-CH_3$, $-CH_2CH_3$, $-CH_2CH_2CH_3$, $-CH_2CH_2CH_2CH_3$, $-C(O)CH_3$, $-CF_3$ and -F; (b) A silyl hydride functional siloxane selected from those comprising the following siloxane units at the following average number range for each siloxane unit per molecule:

$$[R_2HSiO_{1/2}]_m[R_2SiO_{2/2}]_d[RSiO_{3/2}]_t[SiO4/2]_q$$

where the sum of subscripts d, t and q is one or more and wherein: (i) R is independently in each occurrence selected from hydrocarbyl groups having from one to 8 carbon atoms; (ii) subscript m is the average number of $R_2HSiO_{1/2}$ groups per molecule and is 2 or more; (iii) subscript d is the average number of $R_2SiO_{2/2}$ groups per molecule and is zero or more and 20 or less; (iv) subscript t is the average number of $RSiO_{3/2}$ groups per molecule and is zero or more and 2 or less; (v) subscript q is the average number of $SiO_{4/2}$ groups per molecule and is zero or more and 2 or less; and (c) a platinum-based hydrosilylation catalyst; where there are at least 4 molar equivalents of silyl hydride functionalities relative to allyl functionalities in the reaction composition.

In a second aspect, the present invention is a process comprising the steps: (a) providing the reaction composition of the first aspect; (b) heating the reaction composition to a temperature in a range of 80 to 250 degrees Celsius for one hour or longer.

In a third aspect, the present invention is a reaction product of the process of the second aspect, the reaction product characterized by containing 2-alkene polyether at a concentration of less than 5 mole-percent of the concentration of allyl polyether prior to heating to 80 degrees Celsius.

The process of the present invention generates a reaction product that contains less than 5 mol% of the allyl ether as 2-alkene by-products without having to remove any of the by-products after the reaction. In fact, when the allyl ether used in a hydrosilylation reaction has three or more consecutive ether groups per molecule the reaction product cannot be purified by removing 2-alkene isomers of the allyl ether so the only way to prepare such a reaction product is by the process

of the present invention. Therefore, if a hydrosilylation reaction product contains a reacted allyl ether component containing three or more consecutive ether groups, then it necessarily was made by the present inventive process if it contains less than 5 mol% of the allyl ether reactant as a 2-alkene isomer of the allyl ether.

The process of the present invention is useful for preparing polyether functional polysiloxanes, particularly polyether functional polysiloxanes that further contain silyl hydride functionality, while at the same time resulting in less than 5 mol% of the vinyl functional polyether reactants forming 2-alkene polyether impurities residing with the hydrosilylation product.

DETAILED DESCRIPTION OF THE INVENTION

Test methods refer to the most recent test method as of the priority date of this document when a date is not indicated with the test method number. References to test methods contain both a reference to the testing society and the test method number. The following test method abbreviations and identifiers apply herein: ASTM refers to American Society for Testing and Materials; EN refers to European Norm; DIN refers to Deutsches Institut für Normung; ISO refers to International Organization for Standards; and UL refers to Underwriters Laboratory.

Products identified by their tradename refer to the compositions available under those tradenames on the priority date of this document.

"Multiple" means two or more. "And/or" means "and, or as an alternative". All ranges include endpoints unless otherwise indicated. Unless otherwise stated, all weight-percent (wt%) values are relative to composition weight and all volume-percent (vol%) values are relative to composition volume.

"Hydrocarbyl" as used herein includes both substituted and non-substituted hydrocarbyl groups. Substituted carbyl groups have one or more than one hydrogen atom or carbon atom replaced with another atom or group other than hydrogen and carbon. Desirably, unless otherwise stated, the hydrocarbyl is a non-substituted hydrocarbyl.

***Allyl Polyether***

The reaction composition of the present invention comprises an allyl polyether having the following formula:

$$CH_2{=}CHCH_2O\text{-}A_a\text{-}B$$

where:

(i) subscript a is the average number of consecutive A units per molecule and is a value of 2 or more, 3 or more, 4 or more, 5 or more. 6 or more, 7 or more, 8 or more 9 or more, 10 or more, 11 or more, 12 or more, 15 or more 20 or more 25 or more, 50 or more, 75 or more 100 or more and at the same time is generally 170 or less, 150 or less, 125 or less 100 or less, 75 or less, 50 or less, 45 or less, 40 or less, 35 or less, 30 or less, 25 or less, 20 or less, 15 or less, 10 or less even 5 or less, 4 or less, or 3 or less.

(ii) A is independently in each occurrence selected from a group consisting of: $-CH_2CH_2O-$; $-CH_2CH(CH_3)O-$, $-CH(CH_3)CH_2O-$, $CH_2CH(CH_2CH_3)O-$, $-CH(CH_2CH_3)CH_2O-$, $-CH_2CF(CF_3)O-$, $-CF(CF_3)CF_2O-$ and $-CF_2CF(CF_3)O-$. For avoidance of doubt, the allyl polyether can comprise all one type of A unit or a combination of more than one type of A unit.

(iii) B is selected from a group consisting of -H, $-CH_3$, $-CH_2CH_3$, $-CH_2CH_2CH_3$, $-CH_2CH_2CH_2CH_3$, $-C(O)CH_3$, and $-CF_2CF_2CF_3$.

Examples of suitable allyl polyethers include anyone or any combination of more than one allyl polyether selected from a group consisting of: $CH_2{=}CHCH_2O(CH_2CH_2O)_{11}CH_3$; $CH_2{=}CHCH_2O(CH_2CH(CH_3)O)_2CH_3$; $CH_2{=}CHCH_2O(CH_2CH_2O)_{11}(CH_2CH(CH_3)O)_4H$; $CH_2{=}CHCH_2O(CH_2CH_2O)_{18}(CH_2CH(CH_3)O)_5CH_3$; $CH_2{=}CHCH_2O(CH_2CH_2O)_{24}(CH_2CH(CH_3)O)_5CH_3$; $CH_2{=}CHCH_2O(CH_2CH_2O)_{24}(CH_2CH(CH_3)O)_{21}C(O)CH_3$; $CH_2{=}CHCH_2O(CH_2CH_2O)_{24}(CH_2CH(CH_3)O)_{24}CH_3$; and $CH_2{=}CHCH_2OCH_2CF(CF_3)O(CF_2CF(CF_3)O)_{10}CF_2CF_2CF_3$..

Purifying the allyl polyether makes the hydrosilylation reaction with the allyl polyether more efficient. Purify the allyl polyether by exposing it to a purifying agent such as, for example, running the allyl polyether through a bed of the purifying agent or mixing the purifying agent with the allyl polyether to form a slurry and then filtering off the purifying agent. Purifying the allyl polyether by exposure to a purifying agent can occur prior to, during, or prior to and during heating of the ally polyether during a hydrosilylation reaction.

Suitable purifying agents include any one or any combination of more than one component selected from a group consisting of alumina, zeolites, activated carbon and silica alumina. Efficiency is evidenced by the hydrosilylation completing in a shorter time and/or lower temperature and/or lower platinum catalyst loading than an identical hydrosilylation reaction using the allyl polyether without purifying. In the hydrosilylation reaction of present invention, hydrosilylation reaction efficiency is further characterized by achieving reaction product with a mol% 2-alkene isomer of the allyl group below 5 mol%, 4 mol% or lower, 3 mol% or lower, 2 mol% or lower, one mol% or lower in a faster time and/or lower temperature than the same reaction with non-purified allyl polyether. Therefore, it is desirable to purify the allyl polyether prior to conducting a hydrosilylation reaction using the allyl polyether.

### *Silyl Hydride Functional Siloxane*

The present invention comprises a silyl hydride functional siloxane. The silyl hydride functional siloxane comprising, preferably consisting of, the following siloxane units at the following average number range for each siloxane unit per molecule:

$$[R_2HSiO_{1/2}]_m[R_2SiO_{2/2}]_d[RSiO_{3/2}]_t[SiO_{4/2}]_q$$

where the sum of subscripts d, t and q is one or more and wherein:

(i) R is independently in each occurrence selected from hydrocarbyl groups having one carbon or more, 2 carbons or more, 3 carbons or more, 4 carbons or more, 5 carbons or more, 6 carbons or more and even 7 carbons or more while at the same time 8 carbons or less. Desirably, R is independently in each occurrence selected from methyl groups and phenyl groups. More preferably, R is in each occurrence a methyl group.
(ii) Subscript m is the average number of $R_2HSiO_{1/2}$ units per molecule and is 2 or more and at the same time is generally 20 or less, 15 or less, 10 or less, 8 or less, 6 or less, 5 or less, 4 or less, even 3 or less.
(iii) Subscript d is the average number of $R_2SiO_{2/2}$ units per molecule and is zero or more, preferably one or more, 2 or more, 3 or more, 4 or more, 5 or more, 6 or more, 7 or more, 8 or more, 9 or more, even 10 or more, while the same time is typically 20 or less, 19 or less, 18 or less, 17 or less, 16 or less, 15 or less, 14 or less, 12 or less, 10 or less, 8 or less, 6 or less, 4 or less, even 3 or less.
(iv) Subscript t is the average number of $RSiO_{3/2}$ units per molecule and is zero or more, and could be one or more while at the same time is generally 2 or less, even one or less.
(v) Subscript q is the average number of $SiO_{4/2}$ units per molecule and is zero or more, and could be one or more while at the same time is generally 2 or less, even one or less.

Desirably, the silyl hydride functional siloxane has the following formula:

$$[R_2HSiO_{1/2}]_m[R_2SiO_{2/2}]_d$$

where m=2, d is the average number of $R_2SiO_{2/2}$ groups per molecule and is one or more, two or more and 20 or less, preferably 18 or less, and can be 16 or less; and R is independently in each occurrence selected from hydrocarbyl groups having from one to 8 carbon atoms, and preferably R is methyl in each occurrence. The silyl hydride functional siloxane can be selected from those having the formula $[(CH_3)_2HSiO_{1/2}]_2[(CH_3)_2SiO_{2/2}]_1$ and $[(CH_3)_2HSiO_{1/2}]_2[(CH_3)_2SiO_{2/2}]_{16}$.

Unique and important to the performance of the present reaction composition is that the silyl hydride functional siloxane is present at a concentration sufficient to provide at least 4 molar equivalents of silyl hydride functionalities relative to allyl functionalities in the reaction composition. Having an excess of silyl hydride functionality facilitates at least two results: (1) the reaction product will have, on average, at least one silyl hydride functionality per molecule, which leaves it capable of being used as a silyl hydride component in a subsequent hydrosilylation reaction; and (2) there is sufficient silyl hydride to react with all of the allyl groups. The second result is important because it is believed that the isomerization between allyl and 2-alkene isomers of the allyl is reversible, which means if an allyl isomerizes to a 2-alkene isomer during the hydrosilylation reaction there is going to be a silyl hydride present to react with it when it isomerizes back to an allyl. Hence, the excess silyl hydride makes it possible to consume essentially all of the allyl functionality rather than leaving some to exist as a 2-alkene isomer by-product.

### *Platinum-Based Hydrosilylation Catalyst*

The present invention comprises a platinum-based hydrosilylation catalyst. Such catalysts are well known in the art and, in the broadest scope of the present invention, there is no restriction on which platinum-based hydrosilylation catalyst or combination of such catalysts serve as the platinum-based hydrosilylation catalyst of the present invention. Examples of suitable platinum-based hydrosilylation catalyst include any one or any combination of more than one selected from a group consisting of Speier's catalysts ($H_2PtCl_6$), Karstedt's catalyst (organoplatinum compound derived from divinyl-containing disiloxane) and a platinum-based catalyst of 1,3-diethenyl-1,1,3,3-tetramethyldisiloxane complex encapsulate with phenyl resin.

Generally, higher concentrations of platinum-based catalyst result in a faster hydrosilylation reaction - achieving the desired reaction product and target levels of 2-alkene isomers faster and/or at a lower temperature than when using lower concentrations of the catalyst. Target results are achievable using platinum-based catalyst concentrations of one weight-part per million (ppm) or more, preferably 2 ppm or more, 4 ppm or more, 6 ppm or more, 7 ppm or more, 7.5 ppm or more, 10 ppm or more, 15 ppm or more 20 ppm or more, 30 ppm or more, 40 ppm or more, 50 ppm or more, 60 ppm or more, 70 ppm or more, 80 ppm or more, 90 ppm or more, 100 ppm or more, 150 ppm or more 200 ppm or more, 300 ppm or more, even 400 ppm or more. Technically, there is no known upper limit as to the concentration of platinum-based catalyst that can be used. However, cost generally encourages using as little platinum-based catalyst as possible. Therefore, at the same time as one chooses a lower limit for platinum catalyst from the above list the concentration of platinum-based catalyst is generally 500 ppm or less, 400 ppm or less, 300 ppm or less, 200 ppm or less, even 100 ppm or less, 75 ppm or less, 50 ppm or less, 25 ppm or less, even 10 ppm or less. The concentration of platinum-based catalyst is relative to reaction composition weight.

***Hydrosilylation Reaction Process***

The reaction composition of the present invention is useful for conducting a hydrosilylation reaction process with the target results stated above, the process being another aspect of the present invention.

The process of the present invention comprises: (a) providing the reaction composition of the present invention; and (b) heating the reaction composition to a temperature of 80 to 250 degrees Celsius (°C) for one hour or longer.

The reaction process can be conducted in a solvent, which would involve adding to the reaction mixture the solvent preferably prior to the heating step. Suitable solvents for hydrosilylation reactions include any one or any combination or more than one selected from a group consisting of toluene, 2-propanol, 1,3-bis(trifluoromethyl)benzene, and $\alpha,\alpha,\alpha$-trifluoromethylbenzene.

The step of providing the reaction composition desirably includes purifying the allyl polyether prior to the heating step, preferably before combining the allyl polyether with the silyl hydride functional siloxane and/or platinum-based catalyst. Methods for purifying the allyl polyether are set forth above. Purifying the allyl polyether prior to conducting the hydrosilylation reaction tends to result in achieving the desired reaction product and target levels of 2-alkene isomers faster and/or at a lower temperature than when using lower non-purified allyl polyether.

The reaction composition can be provided by combining the allyl polyether with the silyl hydride and platinum-based catalyst. Desirably, mix the reaction composition to obtain as homogeneous of a reaction composition as possible. In general, the components of the reaction composition can be added in any order. For instance, the allyl polyether can be combined with the silyl hydride functional siloxane to form a reactant mixture and then the platinum-based catalyst can be added to the reactant mixture. Alternatively, the platinum-based catalyst can be added to either or both of the allyl polyether and silyl hydride functional siloxane and then the allyl polyether can be combined with the silyl hydride functional siloxane. Alternatively, all three components can be simultaneously added to one another.

Prepare the reaction composition at a temperature below 80 °C, preferably 70 °C or lower, 60 °C or lower, 50 °C or lower, 40 °C or lower, 30 °C or lower, 25 °C or lower, 23 °C or lower, even 20 °C or lower. The hydrosilylation reaction is less likely to proceed at cooler temperatures and it is generally desirable to prepare the reaction composition without significant hydrosilylation reaction activity occurring until desired by heating the reaction composition.

To efficiently induce the hydrosilylation reaction with the reaction composition of the present invention and to achieve product with less than 5 mol% of the allyl polyethers remaining as 2-alkene isomers, heat the reaction composition to a temperature of 80 °C or higher, preferably 90 °C or higher, 100 °C or higher, 110 °C or higher, 120 °C or higher, even 130 °C or higher while at the same time it is common to heat to a temperature of 250 °C or lower, 200 °C or lower, even 150 °C or lower, 130 °C or lower or 110 °C or lower. The hydrosilylation reaction typically runs faster and more quickly produces product with the target properties from the reaction composition at higher the temperatures. At lower reaction temperatures, it is desirable to purify the allyl polyether and/or consider using a higher concentration of platinum-based catalyst to more quickly produce product with the target properties if a particularly fast reaction is desired.

Surprisingly, the process of the present invention achieves the target results, even more surprisingly it can achieve the target results by heating for 48 hours or less, 24 hours or less, 12 hours or less, 10 hours or less, 8 hours or less. 6 hours or less, 4 hours or less and even 2 hours or less while at the same time generally one hour or longer, typically 2 hours or longer at the temperatures and platinum-based catalyst concentrations taught herein.

The process is run with an excess of silyl hydride so the hydrosilylation reaction may produce a product mix that contains unreacted silyl hydride functional siloxane left over and mixed with the hydrosilylation reaction product after the hydrosilylation reaction is complete. The process of the present invention can further include a step of removing unreacted silyl hydride functional siloxane from hydrosilylation reaction product. Methods for removing unreacted silyl hydride functional siloxane include applying vacuum to the hydrosilylation reaction product mix. The unreacted silyl hydride functional siloxane has a higher vapor pressure than the hydrosilylation reaction product and can be evaporated out from the reaction product under vacuum. Applying heat with the vacuum can further facilitate evaporation of the unreacted silyl

hydride functional siloxane.

### *Reaction Product*

The reaction product of the process of the present invention is a polyether functionalized siloxane that also comprises one or more than one silyl hydride functionality. Moreover, the process results in less than 5 mol%, preferably 4 mol% or less, 3 mol% or less, 2 mol% or less, one mol% or less and can be free of 2-alkene isomer of the allyl polyether relative to the amount of starting allyl polyether. Determine the amount of 2-alkene isomer of the allyl polyether relative to the amount of starting allyl polyether using $^{1}H$, $^{13}C$ and $^{29}Si$ nuclear magnetic resonance (NMR) spectroscopy to determine both the relative molar amounts of polyether bounded to polysiloxane relative to polysiloxane molecules ("[bound alkene]") and the relative amounts of 2-alkene isomer relative to polysiloxane molecules ("[isomer alkene]"). The mol% 2-alkene isomer is:

$$\{[\text{isomer alkene}] / ([\text{isomer alkene}]+[\text{bound alkene}])\} \times 100\%.$$

A benefit of the process of the present invention is that it produces the hydrosilylation reaction product with much less 2-alkene isomer by-product than similar hydrosilylation reactions. Moreover, the reaction product contains silyl hydride functionality. As a result, the reaction product can be directly used as a silyl hydride functional reactant in further hydrosilylation reactions and without carrying with it extensive 2-alkene isomer by-product.

In that regard, the hydrosilylation reaction between the allyl polyether and silyl hydride functional polysiloxane can be a first hydrosilylation reaction that generates a first hydrosilylation product that has silyl hydride functionality. An alkene-functional (preferably vinyl or allyl) siloxane can be added to the first hydrosilylation product after heating step (b), preferably after the heating step (b) has been for a long enough period of time to allow all of the allyl groups of the ally polyether to react in forming the first hydrosilylation product, and then heated to conduct a second hydrosilylation reaction between the first hydrosilylation product and the alkene-functional siloxane to produce a second hydrosilylation product.

The alkene-functional siloxane for use in the second hydrosilylation reaction can be, for example, an alkene-functional linear siloxane (such as vinyl functionalized polydimethyl siloxane) or an alkenyl-functional resin. Desirably, the alkene-functional siloxane has the following formula:

$$[R_3SiO_{1/2}]_m[R_2SiO_{2/2}]_d[RSiO_{3/2}]_t[SiO4/2]_q$$

where at least one R contains an alkenyl group, m =0-50 (preferably 1-50), d=1-2000, t=0-30, and q= 0-60.

This second reaction is particularly valuable for efficiently making polyether functional resins, such as polyether functional MQ resins, and for making such resins with low 2-alkene isomer by products. It is unusual to have a polyether with a silyl hydride functionality, particularly with very low 2-alkene isomer content. Hence, the first hydrosilylation product is useful for reacting with MQ resins that have alkenyl (for example, vinyl or allyl) functionality by hydrosilylation to produce polyether functional MQ resins with low 2-alkene isomer by products. Such resins are desirably in many applications where low by product levels are needed, including health and beauty products including creams, make-up, lotions, and cleansing products.

The second hydrosilylation product can be useful, for example, as emulsifiers, dispersants and compatiblizers in beauty care, oil and gas extraction, and polyurethane foam additives. They also have utility in paints, inks and coatings as defoamers, leveling agents and slip and mar additives. Other uses include agricultural adjuvants, thread lubricants, detergents, metal processing and auto care. A benefit of preparing the second hydrosilylation product according the method of the present invention is that it contains very little (less than 5 mol% of the original ally polyether) as 2-alkene isomers or subsequent reaction products of the 2-alkene isomers. That is desirable to reduce odors in the final products and applications.

## Examples

Table 1 lists the components used in the following examples and comparative examples.

Table 1

| Component | Description | Source |
|---|---|---|
| SiH FS1 | 1,1,3,3,5,5-hexamethyltrisiloxane | Available from Gelest as SIH6117.0. |

(continued)

| Component | Description | Source |
|---|---|---|
| SiH FS2 | 1,1,3,3-tetramethyldisiloxane | Available from Sigma Aldrich. |
| SiH FS3 | 1,1,1,3,3-pentamethyldisiloxane | Available from Sigma Aldrich. |
| SiH FS4 | $((CH_3)HSiO_{2/2})_4$ + $((CH_3)HSiO_{2/2})_5$ D' Cyclics materials | Available from The Dow Chemical Company as DOWSIL™ MH 1109 Fluid |
| SiH FS5 | 1,1,1,3,5,5,5-heptamethyltrisiloxane | Available from Sigma Aldrich. |
| SiH FS6 | $(CH_3)_2HSiO_{1/2})_3(SiO_{4/4})$-$((CH_3)_2SiO_{2/2})_{16}$-$(SiO_{4/4})((CH_3)_2HSiO_{1/2})_3$ | Prepare according the method described in US application number 62/783227. |
| SiH FS7 | $((CH_3)_2HSiO_{1/2})_2((CH_3)_2SiO_{2/2})_{16}$ | Available from The Dow Chemical Company under the name XIAMETER™ OFX-5057 Fluid. |
| Catalyst | Platinum (0)-1,3-divinyl-1,1,3,3-tetramethyldisiloxane complex solution (Karstedt's Catalyst) | Available from Sigma Aldrich. |
| Allyl PE1 | Allyl$(EO)_{11}$ OMe | Available from NOF America as PKA-5009. |
| Allyl PE2 | Allyl$(EO)_{24}(PO)_5$OMe | Available from NOF America as UNISAFE 75-MUS-120. |
| Allyl PE3 | Allyl$(EO)_{11}(PO)_4$OH | Prepare according to the teachings in US8008407B2, see column 3 paragraph 20. |
| Allyl PE4 | Allyl$(EO)_{24}(PO)_{24}$OMe | Available from NOF America as RMS 505. |
| Allyl PE5 | Allyl$(EO)_{18}(PO)_5$OH | Available form NOF America as TG-7010. |
| Allyl PE6 | Allyl$(PO)_2$OMe | Prepare according to the teachings in US8008407B2, see column 3 paragraph 20. |
| Allyl PE7 | Allyl$(CH_2CF(CF_3)O)(PFPE)_{11}$F | Available as KRYTOX PFPE AE-2 from Krytox (part of Chemours). |
| Allyl PE8 | Allyl$(EO)_{24}(PO)_{21}$OAc | Prepare according to the teachings in US8008407B2, see column 3 paragraph 20. |

DOWSIL is a trademark of The Dow Chemical Company. XIAMETER is a trademark of Dow Corning Corporation. Allyl is a $CH_2$=$CHCH_2$- group. "EO" is a $-OCH_2CH_2-$ group. "PO" is a $(-OC(CH_3)HCH_2-)$ group. "Me" is a $-CH_3$ group. "Ac" is an acetyl group: $-C(O)CH_3$. "PFPE" is a - $CF_2CF(CF_3)O$- group.

**Sample Preparation**

The tables below provide specific information about the reaction for each Sample. In general, prepare the samples in a glass reaction vessel using a total reaction composition volume in a range of 3 grams to 500 grams. Slowly combine in the glass reaction vessel the silyl hydride functional siloxane and the allyl polyether at concentrations suitable to achieve the specified molar equivalents of silyl hydride functionality to allyl functionality. Insert a polytetrafluoroethylene stirring bar. Seal the glass reaction vessel with a septum and heat to the designated reaction temperature. Inject a solution of the catalyst (0.1 wt% Karstedt's catalyst in toluene) and maintain at the designated reaction temperature for the designated time. Characterize the resulting product for 2-alkene isomer content and remove solvent and excess silyl hydride functional siloxane under vacuum.

**Isomer Content Characterization**

Evaluate the samples for isomer content using $^1H$ NMR spectroscopy using a 400 megahertz magnet. Dilute samples in d6-benzene for analysis. Isomer peaks are at $\delta$ 5.85 ppm and $\delta$ 6.17 ppm in the NMR spectrum.

**DEMONSTRATION OF INVENTION WITH VARIOUS ALLYL POLYETHERS**

Samples 1-11 demonstrate the versatility of the present invention with different allyl polyethers. Each sample was prepared using the same silyl hydride reactant for consistency (SiH SF1) and 9 molar equivalents of SiH to allyl functionality. The samples demonstrate an ability to prepare reaction product with less than 5 mol%, in fact 3 mol% or less and most of the time 0 mol% of the allyl polyethers remaining as 2-alkene isomers in accordance with the present invention. Table 2 presents the formulation information for Samples 1-11, reaction conditions (concentration of platinum catalyst, reaction temperature and reaction time) and resulting mol% of allyl polyether remaining as 2-alkene isomers.

Table 2

| Sample | Polyether | [Pt] (ppm) | Temp (°C) | Time (hours) | 2-alkene Isomer (mol%) |
|---|---|---|---|---|---|
| 1 | Allyl PE1 | 15 | 110 | 2 | 3 |
| 2 | Allyl PE1 | 20 | 110 | 7 | 0 |
| 3 | Allyl PE1 | 30 | 110 | 2 | 0 |
| 4 | Allyl PE2 | 30 | 110 | 8 | 0 |
| 5 | Allyl PE3 | 20 | 110 | 7 | 0 |
| 6 | Allyl PE4 | 7.5 | 110 | 7 | 3 |
| 7 | Allyl PE4 | 20 | 110 | 7 | 0 |
| 8 | Allyl PE5 | 20 | 110 | 7 | 0 |
| 9 | Allyl PE6 | 7.5 | 110 | 7 | 0 |
| 10 | Allvl PE6 | 20 | 110 | 7 | 0 |
| 11 | Allyl PE7 | 10 | 110 | 6 | 0 |
| 12 | Allyl PE8 | 100 | 110 | 5 | 0 |

Table 3 provides the reaction information for Samples 13 and 14. Table 3 reveals the benefit of purifying the allyl polyether prior to conducting the hydrosilylation reaction. Sample 12 in Table 2 reveals that Allyl PE8 can result in a reaction product without 2-alkene isomer. Sample 13 illustrates that running the same reaction with less catalyst can result in 2-alkene isomer when run for 7 hours. Sample 14 illustrates that by purifying the allyl polyether first the reaction of Sample 13 results in no 2-alkene isomers in the final product. The allyl polyether was purified by running it through an alumina column.

Table 3

| Sample | Polyether | [Pt] (ppm) | Temp (°C) | Time (hours) | 2-alkene Isomer (mol% ) |
|---|---|---|---|---|---|
| 13 | Allyl PE8 | 20 | 110 | 7 | 17 |
| 14 | Allyl PE8 (purified) | 20 | 110 | 7 | 0 |

## DEMONSTRATION OF CRITICALITY OF SILYL HYDRIDE TYPE

Table 4 provides the reaction information for Samples 15-18. Each of these reactions use Allyl PE1 as the allyl polyether.

Table 4

| Sample | Silyl Hydride Functional Siloxane | SiH:Allyl molar equivalents | [Pt] (ppm) | Temp (°C) | Time (hours) | 2-alkene Isomer (mol%) |
|---|---|---|---|---|---|---|
| 15 | SiH FS5 | 4.5 | 35 | 110 | 6 | 13 |
| 16 | SiH FS4 | 22 | 35 | 110 | 8 | 15 |
| 17 | SiH FS2 | 9 | 40 | 70 | 6 | 16 |
| 18 | SiH FS2 | 9 | 40 | 85 | 7 | 11 |

Samples 15 and 16 illustrate that when the silyl hydride functionality is on a D-type siloxane unit ($(CH_3)HSiO_{2/2}$) but not on an M-type siloxane unit ($R_3SiO_{1/2}$) then the hydrosilylation reaction results in over 5 mol% of the allyl polyether forming 2-alkene isomer even when run in excess silyl hydride functionality.

Samples 17 and 8 illustrate that when the silyl hydride functional siloxane only contains M' units ($(CH_3)_2HSiO_{1/2}$) then the hydrosilylation reaction results in over 5 mol% of the allyl polyether forming 2-alkene isomer even when run in excess silyl hydride functionality.

## DEMONSTRATION OF INVENTION WITH VARIOUS SILYL HYDRIDE TYPES

Table 5 provides the reaction information for Samples 3, 19 and 20 and demonstrates a variety of silyl hydride functional siloxanes having the silyl hydride functionality on the M-type siloxane unit. Each of Samples 3, 19 and 20 use Allyl PE1 as the allyl polyether. Each of the silyl hydride functional siloxanes with the silyl hydride on the M-type siloxane unit result in the target properties of the present invention.

Table 5

| Sample | Silyl Hydride Functional Siloxane | SiH:Allyl molar equivalents | [Pt] (ppm) | Temp (°C) | Time (hours) | 2-alkene Isomer (mol%) |
|---|---|---|---|---|---|---|
| 3 | SiH FS1 | 9 | 30 | 110 | 2 | 0 |
| 19 | SiH FS6 | 8 | 35 | 110 | 8 | 0 |
| 20 | SiH FS2 | 27 | 35 | 110 | 8 | 0 |

## DEMONSTRATION OF SiH:ALLYL RATIO IMPORTANCE

Table 6 provides the reaction information for Samples 21-23. Each of the Samples use SiH FS1 and Allyl PE1 as the reactants. The results indicate the importance of using more than 2 equivalents of SiH functionality relative to allyl functionality. At 2 molar equivalents Sample 21 fails to achieve the target 2-alkene isomer level even after reacting for 24 hours. Yet, Sample 22 avoids any 2-alkene isomers with a reaction time of 14 hours with 4 equivalents and Sample 23 avoids 2-alkene isomers with a reaction time of 8 hours with 8 equivalents.

Table 6

| Sample | SiH:Allyl molar equivalents | [Pt] (ppm) | Temp (°C) | Time (hours) | 2-alkene Isomer (mol%) |
|---|---|---|---|---|---|
| 21 | 2 | 30 | 110 | 24 | 14 |
| 22 | 4 | 30 | 110 | 14 | 0 |
| 23 | 8 | 30 | 110 | 8 | 0 |

**REACTION TIME**

Table 7 provides reaction properties for pairs of reactions illustrating how reaction time effects the production of 2-alkene isomer. In general, higher temperatures and longer reaction times result in less 2-alkene isomer with all else held constant.

Table 7

| Sample | Silyl Hydride Functional Siloxane | Allyl Polyether | SiH:Allyl molar equivalents | [Pt] (ppm) | Temp (°C) | Time (hours) | 2-alkene Isomer (mol%) |
|---|---|---|---|---|---|---|---|
| 25 | SiH FS1 | Allyl PE3 | 9 | 7.5 | 110 | 1 | 15 |
| 26 | SiH FS1 | Allyl PE3 | 9 | 7.5 | 110 | 7 | 3 |
| 27 | SiH FS1 | Allyl PE4 | 9 | 7.5 | 110 | 1 | 16 |
| 6 | SiH FS1 | Allyl PE4 | 9 | 7.5 | 110 | 7 | 3 |
| 28 | SiH FS1 | Allyl PE5 | 9 | 20 | 110 | 1 | 10 |
| 8 | SiH FS1 | Allyl PE5 | 9 | 20 | 110 | 7 | 0 |
| 29 | SiH FS1 | Allyl PE6 | 9 | 7.5 | 110 | 1 | 14 |
| 9 | SiH FS1 | Allvl PE6 | 9 | 7.5 | 110 | 7 | 0 |
| 30 | SiH FS6 | Allyl PE1 | 27 | 35 | 110 | 0.5 | 7 |
| 20 | SiH FS6 | Allyl PE1 | 27 | 35 | 110 | 8 | 0 |
| 31 | SiH FS1 | Allyl PE7 | 9 | 10 | 110 | 0.25 | 9 |
| 11 | SiH FS1 | Allyl PE7 | 9 | 7.5 | 110 | 5 | 0 |
| 32 | SiH FS7 | Allyl PE1 | 8 | 35 | 110 | 1 | 7 |
| 19 | SiH FS7 | Allyl PE1 | 8 | 35 | 110 | 8 | 0 |

The results indicate that a reaction time of at least 2 hours is desirable to result in 5 mol% or less of the allyl polyether forming 2-alkene isomers in the final reaction product.

**SUBSEQUENT HYDROSILYLATION REACTIONS**

One of the benefits of the present invention is that it provides a means to forming a hydrosilylation reaction product that not only turns less than 5 mol% of the starting allyl polyether into 2-alkene isomers that in the reaction product, but also that the reaction product contains a silyl hydride on an M-type siloxane unit that can be used in subsequent hydrosilylation reactions.

Samples 33-36 illustrate processes where the reaction product of an initial hydrosilylation reaction in accordance with the present invention is subsequently used in another hydrosilylation reaction with a vinyl-functional polysiloxane.

***Sample 33.*** Add to a 500 milliliter (mL) flask 50.0 grams (g) of the reaction product of Sample 10 without further purification with 67.1 g of $(CH_3)_3SiO((CH_3)_2SiO)_{1.2}((CH_3)(CH_2{=}CH\text{-})SiO)_{1.2}OSi(CH_3)_3$ (aka "$MD_{1.2}D^{vi}_{1.2}M$"). Add a polytetrafluoroethylene stir bar. Seal the flask with a rubber septum, purge with inert gas and heat to 110 °C for 5 hours. $^1H$ NMR spectroscopy reveals 99% of the SiH groups are consumed and hydrosilylation reaction product is isolated as a clear colorless oil.

Prepare $MD_{1.2}D^{vi}_{1.2}M$ reactant in a one-liter round bottom flask. Combine 260 grams of 0.65 centiStoke (cSt) polydimethylsiloxane, 154 grams of $D^{vi}_4$ polysiloxane (for example DOWSIL1-2287 Intermediate from The Dow Chemical Company), 133 grams of $D_4$ polysiloxane (for example DOWSIL 244 Fluid from The Dow Chemical Company) and 0.1 weight-percent potassium hydroxide in the flask. Purge with inert gas and heat to 140 °C for 4 hours. Cool the reaction mixture and neutralize with phosphoric acid. Stir over sodium bicarbonate and filter to yield the $MD_{1.2}D^{vi}_{1.2}M$ product

***Sample 34.*** Add to a 500 milliliter (mL) flask 92.9 grams (g) of the reaction product of Sample 10 without further purification with 45 g of $(CH_3)_3SiO((CH_3)_2SiO)_{3.1}((CH_3)(CH_2{=}CH\text{-})SiO)_{3.7}OSi(CH_3)_3$ (aka "$MD_{3.1}D^{vi}_{3.7}M$"). Add a polytetrafluoroethylene stirbar. Seal the flask with a rubber septum, purge with inert gas and heat to 110 °C for 5 hours. $^1H$ NMR spectroscopy reveals 99% of the SiH groups are consumed and hydrosilylation reaction product is isolated as a clear colorless oil.

Prepare $MD_{3.1}D^{vi}_{3.7}M$ reactant in a one-liter round bottom flask. Combine 300 grams of 2 cSt polydimethylsiloxane, 226 grams of $D^{vi}_4$ polysiloxane (for example DOWSIL1-2287 Intermediate from The Dow Chemical Company), and 0.1 weight-percent potassium hydroxide in the flask. Purge with inert gas and heat to 140 °C for 4 hours. Cool the reaction mixture and neutralize with phosphoric acid. Stir over sodium bicarbonate and filter to yield the $MD_{3.1}D^{vi}_{3.7}M$ product.

***Sample 35.*** Combine in a 40 mL dram vial 92.9 g of the product of Sample 10 without further purification with 2.18g of $(CH_3)_3SiO((CH_3)_2SiO)_{124}((CH_3)(CH_2{=}CH\text{-})SiO)_{12}OSi(CH_3)_3$ (aka "$MD_{124}D^{vi}_{12}M$"). Add a polytetrafluoroethylene stirbar. Seal the flask with a rubber septum, purge with inert gas and heat to 110 °C for 3 hours. $^1H$ NMR spectroscopy reveals 99% of the SiH groups are consumed and hydrosilylation reaction product is isolated as a clear colorless oil.

Prepare $MD_{124}D^{vi}_{12}M$ reactant in a one-liter round bottom flask. Combine 21 grams of 2 cSt polydimethylsiloxane, 53 grams of $D^{vi}_4$ polysiloxane (for example DOWSIL1-2287 Intermediate from The Dow Chemical Company), 486 grams of $D_4$ polysiloxane (for example DOWSIL 244 Fluid from The Dow Chemical Company) and 0.1 weight-percent potassium hydroxide in the flask. Purge with inert gas and heat to 140 °C for 4 hours. Cool the reaction mixture and neutralize with phosphoric acid. Stir over sodium bicarbonate and filter and strip under vacuum to yield the $MD_{124}D^{vi}_{12}M$ product.

***Sample 36.*** Add to a 500 milliliter (mL) flask 20 g of 2-propanol, 4.77g of the reaction product of Sample 11 without further purification and 100 g of a vinyl-functional MQ resin having a weight-average molecular weight (by gel permeation chromatography) of 25,000 Daltons, 5-6 mol% vinyl relative to silicon atoms and 6-8 mol% combined -OH and -$OCH(CH_3)_2$ groups. Seal with a rubber septum, purge with inert gas and heat to 60 °C. Add 0.2 g of Karstedt's Catalyst (1 wt% in toluene) to the reaction mixture. Heat to 82 °C for 3 hours. The $^1H$ NMR spectrum reveals complete reaction of the SiH functionalities.

Prepare the vinyl-functional MQ resin by any method known in the art, including that of WO2010/079366 paragraphs [0016]-[0018] as well as US2676182 paragraphs [0017]-[0018].

## Claims

**1.** A reaction composition comprising:

(a) an allyl polyether, the allyl polyether having the following formula:

$$CH_2{=}CHCH_2O\text{-}A_a\text{-}B$$

where:

(i) subscript a is the average number of consecutive A units per molecule and is a value in a range of 2 to 170;
(ii) A is independently in each occurrence selected from a group consisting of: $-CH_2CH_2O-$; $-CH_2CH(CH_3)O-$; $-CH(CH_3)CH_2O-$, $CH_2CH(CH_2CH_3)O-$ ; $-CH(CH_2CH_3)CH_2O-$, $-CH_2CF(CF_3)O-$, - $CF(CF_3)CF_2O-$ and $-CF_2CF(CF_3)O-$; and
(iii) B is selected from a group consisting of -H, $-CH_3$, $-CH_2CH_3$, - $CH_2CH_2CH_3$, $-CH_2CH_2CH_2CH_3$, $-C(O)CH_3$, and $-CF_2CF_2CF_3$;

(b) A silyl hydride functional siloxane selected from those comprising the following siloxane units at the following average number range for each siloxane unit per molecule:

$$[R_2HSiO_{1/2}]_m[R_2SiO_{2/2}]_d[RSiO_{3/2}]_t[SiO_{4/2}]_q$$

where the sum of subscripts d, t and q is one or more and wherein:

(i) R is independently in each occurrence selected from hydrocarbyl groups having from one to 8 carbon atoms;
(ii) subscript m is the average number of $R_2HSiO_{1/2}$ groups per molecule and is 2 or more;
(iii) subscript d is the average number of $R_2SiO_{2/2}$ groups per molecule and is zero or more and 20 or less;
(iv) subscript t is the average number of $RSiO_{3/2}$ groups per molecule and is zero or more and 2 or less;
(v) subscript q is the average number of $SiO_{4/2}$ groups per molecule and is zero or more and 2 or less; and

(c) a platinum-based hydrosilylation catalyst;

where there are at least 4 molar equivalents of silyl hydride functionalities relative to allyl functionalities in the reaction composition.

2. The reaction composition of Claim 1, wherein the silyl hydride functional siloxane is **characterized by** each R being methyl.

3. The reaction composition of any one previous Claim, wherein the silyl hydride function siloxane has the following formula:

$$[R_2HSiO_{1/2}]_m[R_2SiO_{2/2}]_d$$

where m=2, d is the average number of $R_2SiO_{2/2}$ groups per molecule and is one or more and 16 or less; and R is independently in each occurrence selected from hydrocarbyl groups having from one to 8 carbon atoms.

4. The reaction composition of Claim 3, wherein the silyl hydride functional siloxane is further **characterized by** d=l and each R is a methyl.

5. The reaction composition of any one previous Claim, wherein the concentration of platinum-based hydrosilylation catalyst is one or more weight-part per million weight parts relative to composition weight.

6. A process comprising the steps:

(a) providing the reaction composition of any one previous Claim; and
(b) heating the reaction composition to a temperature in a range of 80 to 250 degrees Celsius for one hour or longer.

7. The process of Claim 6, wherein providing the reaction composition includes a step of purifying the allyl polyether by exposing it to at least one component selected from a group consisting of alumina, zeolites, activated carbon and silica alumina prior to and/or during the heating step (b).

8. The process of either Claim 6 or Claim 7, wherein the process includes removing unreacted silyl hydride functional polysiloxane after the heating step (b).

9. The process of any one of Claims 6-8, wherein steps (a) and (b) constitute a first hydrosilylation reaction that produces a first hydrosilylation product that has silyl hydride functionality and wherein the process further includes a step (c) of adding alkene-functional siloxane to the first hydrosilylation product after heating step (b) and then heating to conduct a second hydrosilylation reaction between the first hydrosilylation product and the alkene- functional siloxane.

## Patentansprüche

1. Reaktionszusammensetzung, umfassend:

(a) einen Allylpolyether, wobei der Allylpolyether die folgende Formel aufweist:

$$CH_2=CHCH_2O-A_a-B$$

worin:

(i) Index a die durchschnittliche Anzahl aufeinanderfolgender A-Einheiten pro Molekül ist und ein Wert im Bereich von 2 bis 170 ist;
(ii) A unabhängig bei jedem Auftreten ausgewählt ist aus einer Gruppe, bestehend aus: $-CH_2CH_2O-$; $-CH_2CH(CH_3)O-$; $-CH(CH_3)CH_2O-$, $CH_2CH(CH_2CH_3)O-$; $-CH(CH_2CH_3)CH_2O-$, $-CH_2CF(CF_3)O-$, $-CF(CF_3)CF_2O-$ und $-CF_2CF(CF_3)O-$; und
(iii) B ausgewählt ist aus einer Gruppe, bestehend aus -H, $-CH_3$, $-CH_2CH_3$, $-CH_2CH_2CH_3$, $-CH_2CH_2CH_2CH_3$, $-C(O)CH_3$ und $-CF_2CF_2CF_3$;

(b) ein funktionelles Silylhydrid-Siloxan, ausgewählt aus denjenigen, umfassend die folgenden Siloxaneinheiten

in dem folgenden durchschnittlichen Zahlenbereich für jede Siloxaneinheit pro Molekül:

$$[R_2HSiO_1/_2]_m[R_2SiO_2/_2]_d[RSiO_3/_2]_t[SiO_4/_2]_q$$

worin die Summe der Indizes d, t und q eins oder mehr beträgt und wobei:

(i) R unabhängig bei jedem Auftreten ausgewählt ist aus Kohlenwasserstoffgruppen, die ein bis 8 Kohlenstoffatome aufweisen;
(ii) Index m die durchschnittliche Anzahl von $R_2HSiO_1/_2$-Gruppen pro Molekül ist und 2 oder mehr beträgt;
(iii) Index d die durchschnittliche Anzahl von $R_2SiO_2/_2$-Gruppen pro Molekül ist und Null oder mehr und 20 oder weniger beträgt;
(iv) Index t die durchschnittliche Anzahl von $RSiO_3/_2$-Gruppen pro Molekül ist und Null oder mehr und 2 oder weniger beträgt;
(v) Index q die durchschnittliche Anzahl von $SiO_4/_2$-Gruppen pro Molekül ist und Null oder mehr und 2 oder weniger beträgt; und

(c) einen Hydrosilylierungskatalysator auf Platinbasis;

wobei in der Reaktionszusammensetzung mindestens 4 Moläquivalente von Silylhydrid-Funktionalitäten in Bezug auf Allyl-Funktionalitäten vorhanden sind.

2. Reaktionszusammensetzung nach Anspruch 1, wobei das funktionelle Silylhydrid-Siloxan **dadurch gekennzeichnet ist, dass** jedes R Methyl ist.

3. Reaktionszusammensetzung nach einem der vorstehenden Ansprüche, wobei das funktionelle Silylhydrid-Siloxan die folgende Formel aufweist:

$$[R_2HSiO_{1/2}]_m[R2SiO_{2/2}]_d$$

worin m=2, d die durchschnittliche Anzahl von $R_2SiO_{2/2}$-Gruppen pro Molekül ist und eins oder mehr und 16 oder weniger beträgt; und R unabhängig bei jedem Auftreten ausgewählt ist aus Kohlenwasserstoffgruppen, die ein bis 8 Kohlenstoffatome aufweisen.

4. Reaktionszusammensetzung nach Anspruch 3, wobei das funktionelle Silylhydrid-Siloxan ferner **dadurch gekennzeichnet ist, dass** d=1 und jedes R Methyl ist.

5. Reaktionszusammensetzung nach einem der vorstehenden Ansprüche, wobei die Konzentration des Hydrosilylierungskatalysators auf Platinbasis ein oder mehrere Gewichtsteile pro Million Gewichtsteile in Bezug auf das Gewicht der Zusammensetzung beträgt.

6. Verfahren, umfassend die Schritte:

(a) Bereitstellen der Reaktionszusammensetzung nach einem der vorstehenden Ansprüche; und
(b) Erwärmen der Reaktionszusammensetzung auf eine Temperatur in einem Bereich von 80 bis 250 Grad Celsius für eine Stunde oder länger.

7. Verfahren nach Anspruch 6, wobei das Bereitstellen der Reaktionszusammensetzung einen Schritt des Reinigens des Allylpolyethers einschließt, indem dieser vor und/oder während des Erwärmungsschritts (b) mindestens einer Komponente, ausgewählt aus der Gruppe, bestehend aus Aluminiumoxid, Zeolithen, Aktivkohle und Silica-Aluminiumoxid, ausgesetzt wird.

8. Verfahren nach Anspruch 6 oder Anspruch 7, wobei das Verfahren das Entfernen von nicht umgesetztem funktionellem Silylhydrid-Polysiloxan nach dem Erwärmungsschritt (b) einschließt.

9. Verfahren nach einem der Ansprüche 6 bis 8, wobei die Schritte (a) und (b) eine erste Hydrosilylierungsreaktion darstellen, die ein erstes Hydrosilylierungsprodukt produziert, das eine Silylhydrid-Funktionalität aufweist, und wobei das Verfahren ferner einen Schritt (c) des Hinzufügens von funktionellem Alken-Siloxan zu dem ersten Hydrosilylierungsprodukt nach dem Erwärmungsschritt (b) und anschließend Erwärmen, um eine zweite Hydrosilylierungsreaktion zwischen dem ersten Hydrosilylierungsprodukt und dem funktionellen Alkensiloxan durchzuführen, einschließt.

## Revendications

**1.** Composition de réaction comprenant :

(a) un polyéther d'allyle, le polyéther d'allyle ayant la formule suivante :

$$CH_2{=}CHCH_2O\text{-}A_a\text{-}B$$

où :

(i) l'indice a est le nombre moyen de motifs A consécutifs par molécule et est une valeur comprise dans une plage de 2 à 170 ;
(ii) A est indépendamment, dans chaque cas, choisi dans un groupe constitué de : $-CH_2CH_2O-$ ; $-CH_2CH(CH_3)O-$ ; $-CH(CH_3)CH_2O-$, $CH_2CH(CH_2CH_3)O-$ ; - $CH(CH_2CH_3)CH_2O-$, $-CH_2CF(CF_3)O-$, $-CF(CF_3)CF_2O-$ et $-CF_2CF(CF_3)O-$ ; et
(iii) B est choisi dans un groupe constitué de -H, $-CH_3$, $-CH_2CH_3$, - $CH_2CH_2CH_3$, $-CH_2CH_2CH_2CH_3$, -C(O) $CH_3$, et $-CF_2CF_2CF_3$ ;

(b) un siloxane à fonctionnalité hydrure de silyle choisi parmi ceux comprenant les motifs siloxane suivants dans la plage de nombre moyen suivante pour chaque motif siloxane par molécule :

$$[R_2HSiO_{1/2}]_m[R_2SiO_{2/2}]_d[RSiO_{3/2}]_t[SiO_{4/2}]_q$$

où la somme des indices d, t et q est supérieure ou égale à un et dans laquelle :

(i) R est indépendamment, dans chaque cas, choisi parmi des groupes hydrocarbyle ayant de un à 8 atomes de carbone ;
(ii) l'indice m est le nombre moyen de groupes $R_2HSiO_{1/2}$ par molécule et est supérieur ou égal à 2 ;
(iii) l'indice d est le nombre moyen de groupes $R_2SiO_{2/2}$ par molécule et est supérieur ou égal à zéro ou et inférieur ou égal à 20 ;
(iv) l'indice t est le nombre moyen de groupes $RSiO_{3/2}$ par molécule et est supérieur ou égal à zéro et inférieur ou égal à 2 ;
(v) l'indice q est le nombre moyen de groupes $SiO_{4/2}$ par molécule et est supérieur ou égal à zéro et inférieur ou égal à 2 ; et

(c) un catalyseur d'hydrosilylation à base de platine ;

où il y a au moins 4 équivalents molaires de fonctionnalités hydrure de silyle par rapport aux fonctionnalités allyle dans la composition de réaction.

**2.** Composition de réaction selon la revendication 1, dans laquelle le siloxane à fonctionnalité hydrure de silyle est **caractérisé par le fait que** chaque R est méthyle.

**3.** Composition de réaction selon l'une quelconque revendication précédente, dans laquelle le siloxane à fonctionnalité hydrure de silyle a la formule suivante :

$$[R_2HSiO_{1/2}]_m[R_2SiO_{2/2}]_d$$

où m = 2, d est le nombre moyen de groupes $R_2SiO_{2/2}$ par molécule et est supérieur ou égal à zéro et inférieur ou égal à 16 ; et R est indépendamment, dans chaque cas, choisi parmi des groupes hydrocarbyle ayant de un à 8 atomes de carbone.

**4.** Composition de réaction selon la revendication 3, dans laquelle le siloxane à fonctionnalité hydrure de silyle est en outre **caractérisé par le fait que** d = 1 et que chaque R est un méthyle.

**5.** Composition de réaction selon l'une quelconque revendication précédente, dans laquelle la concentration du catalyseur d'hydrosilylation à base de platine est supérieure ou égale à une partie en poids par million de parties en poids par rapport au poids de la composition.

**6.** Procédé comprenant les étapes consistant à :

(a) fournir la composition de réaction selon l'une quelconque revendication précédente ; et
(b) chauffer la composition de réaction à une température comprise dans une plage de 80 à 250 degrés Celsius pendant une heure ou plus.

**7.** Procédé selon la revendication 6, dans lequel la fourniture de la composition de réaction comporte une étape consistant à purifier le polyéther d'allyle en l'exposant à au moins un composant choisi dans un groupe constitué d'alumine, zéolithes, charbon actif et silice alumine avant et/ou pendant l'étape de chauffage (b).

**8.** Procédé selon la revendication 6 ou la revendication 7, dans lequel le procédé comporte l'élimination du polysiloxane à fonctionnalité hydrure de silyle n'ayant pas réagi après l'étape de chauffage (b).

**9.** Procédé selon l'une quelconque des revendications 6 à 8, dans lequel les étapes (a) et (b) constituent une première réaction d'hydrosilylation qui produit un premier produit d'hydrosilylation qui a une fonctionnalité hydrure de silyle et dans lequel le procédé comporte en outre une étape (c) consistant à ajouter un siloxane à fonctionnalité alcène au premier produit d'hydrosilylation après l'étape de chauffage (b), puis à chauffer afin de conduire une seconde réaction d'hydrosilylation entre le premier produit d'hydrosilylation et le siloxane à fonctionnalité alcène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8877886 B
- US 2004132951 A
- US 2012245305 A
- EP 0995771 A
- US 2016331673 A
- WO 2010079366 A
- US 2676182 A